# EUROPEAN PATENT APPLICATION

(11) **EP 4 826 350 A1**
(43) Date of publication of application: **21.10.2026**
(21) Application number: 25315134.4
(22) Date of filing: 17.04.2025
(51) Int. Cl.: G01M 11/08, B29D 11/00, B29C 33/42

(54) **METHOD FOR CHARACTERIZING AT LEAST PART OF AN INSERT**

(71) Applicant: Essilor International, 94220 Charenton-Le-Pont (FR)
(72) Inventor: Hugonneaux, Patrick, 94500 Champigny-sur-Marne (FR); Sargeni, Lorenzo, 75010 Paris (FR)
(74) Representative: Cabinet Novitech

(57) **Abstract**

Method for characterizing at least part of an insert of an optical mold at least partially reflecting visible light, for example having a mean transmission T below 50% over the visible spectrum, the insert comprising an inner surface comprising a plurality of insert elements and being adapted to obtain a face of a lens element comprising a plurality of optical elements corresponding to the plurality of insert elements, each optical element of the plurality of optical elements having a mean sphere;
wherein the method comprises:
- obtaining a two-dimensional representation of the local mean sphere of at least part of the insert inner surface using a fringes projection profilometry method,
- determining the mean sphere distribution over at least part of the two-dimensional representation of the insert inner surface, and
- characterizing at least the part of the insert inner surface within said at least part of the two-dimensional representation of the insert inner surface by analyzing the determined mean sphere distribution.

## Description

### TECHNICAL FIELD

The disclosure relates to a method, for example implemented by computer means, for characterizing least part of an insert of an optical mold at least partially reflecting visible light, for example having a mean transmission T below 50% over the visible spectrum, the insert comprising an inner surface comprising a plurality of insert elements and being adapted to obtain a face of a lens element comprising a plurality of optical elements corresponding to the plurality of insert elements.

The disclosure further relates to a method, for example implemented by computer means, for checking the conformity of an insert of an optical mold at least partially reflecting visible light, for example having a transmission T below 50% over the visible spectrum, the insert comprising an inner surface comprising a plurality of insert elements and being adapted to obtain a face of lens element comprising a plurality of optical elements corresponding to the plurality of insert elements, each optical element of the plurality of optical elements having a mean sphere.

The disclosure also relates to a method, for example implemented by computer means, for controlling an insert manufacturing process for manufacturing an insert of an optical mold at least partially reflecting visible light, for example having a transmission T below 50% over the visible spectrum, each insert comprising an inner surface comprising a plurality of insert elements and being adapted to obtain a face of lens element comprising a plurality of optical elements corresponding to the plurality of insert elements, each optical element of the plurality of optical elements having a mean sphere so as to at least one of slow down, retard or prevent a progress of the abnormal refraction of the eye of the wearer.

### BACKGROUND OF THE DISCLOSURE

Myopia of an eye is characterized by the fact that the eye focuses distant objects in front of its retina. Myopia is usually corrected using a concave lens and hypermetropia is usually corrected using a convex lens.

It has been observed that some individuals when corrected using conventional single vision optical lenses, in particular children, focus inaccurately when they observe an object which is situated at a short distance away, that is to say, in near vision conditions. Because of this focusing defect on the part of a myopic child which is corrected for his far vision, the image of an object close by is also formed behind his retina, even in the foveal area.

Such focusing defect may have an impact on the progression of myopia of such individuals. One may observe that for most of said individuals the myopia defect tends to increase over time.

Recent controlled clinical trials provided evidence of the benefit of optical elements, such as microlenses, in the visual field to slow down myopia progression. The purpose of the optical elements is to provide an optical blurred image to the retina of the wearer, triggering a stop signal to the eyes growth.

Such optical lenses are mostly manufactured starting with semi-finished optical lenses. The semi-finished optical lenses are usually obtained using an insert having a surface comprising a plurality of insert elements each of which have a shape corresponding to a mean sphere. The insert elements of the insert are to provide by molding the optical elements of the semi-finished optical lens.

Therefore, it is of great importance to have a method that allows an efficient, simple and accurate characterization of at least part of the insert elements that are to provide the optical elements of the semi-finished optical lens and finally the optical lens to be worn by the wearer.

A purpose of this disclosure is to provide such a method.

### SUMMARY OF THE DISCLOSURE

To this end, the disclosure proposes a method, for example implemented by computer means, for characterizing at least part of an insert of an optical mold at least partially reflecting visible light, for example having a mean transmission T below 50% over the visible spectrum, the insert comprising an inner surface comprising a plurality of insert elements each having a mean sphere and being adapted to obtain a face of a lens element comprising a plurality of optical elements corresponding to the plurality of insert elements, each optical element of the plurality of optical elements having a mean sphere;
wherein the method comprises:
- obtaining a two-dimensional representation of the local mean sphere of at least part of the insert inner surface using a fringes projection profilometry method,
- determining the mean sphere distribution over at least part of the two-dimensional representation of the insert inner surface, and
- characterizing at least the part of the insert inner surface within said at least part of the two-dimensional representation of the insert inner surface by analyzing the determined mean sphere distribution.

Advantageously, the method of the disclosure allows characterizing directly at least part of an insert of an optical mold and does not require manufacturing a lens element. Unlike the prior art method that required manufacturing an optical lens using the mold to characterize the mold via the manufactured optical lens, the method of the disclosure allows characterizing directly the insert. Indeed, using

The method of the disclosure allows characterizing the insert by adapting existing deflectometry measuring devices. The method of the disclosure can be carried out very quickly and in particular in a manufacturing lab context.

According to further embodiments which can be considered alone or in combination:
- the fringes projection profilometry method comprises at least of:
   o projecting images of fringes on at least part of the insert inner surface,
   o acquiring reflected images of fringes reflected by the at least part of the insert inner surface on which the images of fringes are acquired,
   o determining a phase map of the at least part of the insert inner surface based on the obtained reflected images of fringes; and/or
- the two-dimensional representation of the local mean sphere of the at least part of the insert inner surface is obtained based on a map of the module of derivative of the phase map of the at least part of the insert inner surface; and/or
- prior to obtaining the two-dimensional representation of the local mean sphere of the least part of the insert inner surface, the method further comprises:
   o calibrating the fringes projection profilometry method by determining maps of module of derivative of the phase maps of at least two, for example at least four, reflective gauges having known mean spheres, and
   o determining a relationship between the map of derivative of the phase maps and the two-dimensional representation of the local mean sphere based on the phase maps of the at least two, for example at least four, reflective gauges; and/or
- the fringes projection profilometry method comprises projecting images of at least two series of fringes, the fringes of the different series of fringes being perpendicular to each other; and/or
- prior to projecting the images of fringes, the method comprises adjusting the step of the fringes to increase the accuracy of the mean sphere measurements by comparing the mean sphere values with reference mean sphere values; and/or
- prior to projecting the images of fringes, the method comprises adjusting the distance between the fringes and the insert to increase the accuracy of the mean sphere measurements by comparing the mean sphere values with reference mean sphere values; and/or
- the two-dimensional representation of the local mean sphere corresponds to at least 25%, of the insert inner surface; and/or
- the two-dimensional representation of the local mean sphere corresponds to at least a part of the insert inner surface that comprises at least 25% of the insert elements; and/or
- the images used for the fringe projection profilometry method are composed of pixels smaller than or equal to 0.05 mm x 0.05 mm; and/or
- the part of the insert inner surface within said at least part of the two-dimensional representation of the lens element is characterized based on at least one of:
   o the mean sphere value of at least one local maximum of the determined mean sphere distribution, and/or
   o the surface of at least one local maximum of the determined mean sphere distribution, and/or
   o the width value of at least one local maximum of the determined mean sphere distribution, and/or
   o the degree of symmetry of at least one local maximum of the determined mean sphere distribution; and/or
- characterizing at least part of the plurality of insert elements comprises at least identifying the center of at least part of the insert elements, for example using a Hough transformation algorithm; and/or
- characterizing at least part of the plurality of insert elements comprises at least determining:
   o the mean sphere at the center of at least part of the insert elements and/or
   o the global average means sphere of at least part of the insert elements and/or
   o the peripheral mean sphere of at least part of the insert elements and/or
   o the asphericity of at least part of the insert elements and/or
   o the number of insert elements and/or
   o the density of insert elements and/or
   o the positions of the insert elements; and/or
   o the size of at least part of the insert elements; and/or
- characterizing at least part of the plurality of insert elements comprises at least determining the optical cylinder value and the optical cylinder axis of at least part of the insert elements; and/or
- characterizing at least part of the plurality of insert elements comprises determining the average mean sphere of the holder around the insert element and subtracting said average mean sphere to the two-dimensional representation of the local mean spheres; and/or
- at least 50%, for example at least 80%, for example at least 95%, of the insert elements correspond to refractive lenslets; and/or
- at least 50%, for example at least 80%, for example at least 95%of the insert elements correspond to multifocal lenslets.
- the two-dimension representation of the insert inner surface is obtained using a pupil diameter greater than or equal to 4 mm and smaller than or equal to 15 mm; and/or
- the two-dimension representation of the insert inner surface corresponds to at least 25%, for example at least 50%, for example at least 80%, of the inner surface of the insert; and/or
- the two-dimension representation of the insert inner surface corresponds to at least a part of the insert inner surface that comprises at least 25%, for example at least 40%, for example at least 80%, of the insert elements; and/or
- the method characterizes at least part of the insert elements within said at least part of the two-dimension representation of the insert; and/or
- at least 50%, for example 90%, for example all, of the insert element correspond to optical elements that are multifocal lenslets; and/or
- at least 50%, for example at least 90%, for example all, of the insert element correspond to refractive lenslets; and/or
- the insert elements have a contour shape being inscribable in a circle having a diameter greater than or equal to 0.1 mm and smaller than or equal to 7.0 mm, for example smaller than or equal to 3.0 mm; and/or
- the insert elements are positioned on a mesh; and/or
- the mesh is a structured mesh; and/or
- the insert elements are positioned along a plurality of concentric rings; and/or
- the insert further comprises at least four, for example at least twenty, for example at least fifty, insert elements organized in at least two groups of contiguous optical elements; and/or
- each group of contiguous insert element is organized in at least two concentric rings having the same center, the concentric ring of each group of contiguous optical element being defined by an inner diameter corresponding to the smallest circle that is tangent to at least one inert element of said group and an outer diameter corresponding to the largest circle that is tangent to at least one insert elements of said group; and/or
- at least part of, for example all the concentric rings of insert elements are centered on the center of the inner surface on which said insert elements are disposed; and/or
- the concentric rings of insert elements have a diameter comprised between 9.0 mm and 70 mm; and/or
- the distance between two successive concentric rings of inert elements is greater than or equal to 0.5 mm, the distance between two successive concentric rings being defined by the difference between the outer diameter of a first concentric ring and the inner diameter of a second concentric ring, the second concentric ring being closer to the periphery of the inner surface of the insert; and/or
- the inner surface of the insert further comprises inner elements positioned radially between two concentric rings; and/or
- the structured mesh is a squared mesh or a hexagonal mesh or a triangle mesh or an octagonal mesh; and/or
- the mesh structure is a random mesh, for example a Voronoid mesh; and/or
- for every circular zone having a radius comprised between 2 and 4 mm comprising a geometrical center located at a distance of the center of the inner surface greater or equal to said radius + 5mm, for example equal to +7 mm, for example equal to +9 mm, the ratio between the sum of areas of the parts of insert elements located inside said circular zone and the area of said circular zone is comprised between 20% and 70%.

The disclosure further relates to a method, for example implemented by computer means, for checking the conformity of an insert of an optical mold at least partially reflecting visible light, for example having a transmission T below 50% over the visible spectrum, the insert comprising an inner surface comprising a plurality of insert elements and being adapted to obtain a face of lens element comprising a plurality of optical elements corresponding to the plurality of insert elements, each optical element of the plurality of optical elements having a mean sphere;
so as to at least one of slow down, retard or prevent a progress of the abnormal refraction of the eye of the wearer,
wherein the method comprises:
   - obtaining characterizing data relating to at least one mean sphere characteristic of the insert elements of the insert,
   - characterizing the insert elements of the insert using the method of the disclosure,
   - comparing the characteristics of the insert elements of the insert with the characterizing data so as to check the conformity of the insert.

The disclosure also relates to a method, for example implemented by computer means, for controlling an insert manufacturing process for manufacturing an insert of an optical mold at least partially reflecting visible light, for example having a transmission T below 50% over the visible spectrum, each insert comprising an inner surface comprising a plurality of insert elements and being adapted to obtain a face of lens element comprising a plurality of optical elements corresponding to the plurality of insert elements, each optical element of the plurality of optical elements having a mean sphere so as to at least one of slow down, retard or prevent a progress of the abnormal refraction of the eye of the wearer, wherein the method comprises the steps of:
a) manufacturing an insert according to a manufacturing process,
b) determining at least one characteristic of the insert of step a) according to the method of the disclosure,
c) recording the difference between the determined at least one characteristic and a reference value,
d) repeating regularly step a) to c) and checking the evolution of the difference over time,
wherein the evolution of at least one parameter of the manufacturing process used for manufacturing the insert is checked over time and the evolution over time of said difference is related with the evolution over time of the at least one parameter of the manufacturing process.

The disclosure further relates to a computer program product comprising one or more stored sequences of instructions that are accessible to a processor and which, when executed by the processor, causes the processor to carry out the steps of the any method of the disclosure.

The disclosure also relates to a program which makes a computer execute the method of the disclosure.

The disclosure further relates to a computer-readable storage medium having a program recorded thereon, wherein the program makes the computer execute a method according to the disclosure.

The disclosure also relates to a device comprising a processor adapted to store one or more sequence of instructions and to carry out the steps of the method according to the disclosure.

The disclosure also relates to a computer readable medium carrying one or more sequences of instructions of the computer program product according to the disclosure.

### BRIEF DESCRIPTION OF THE DRAWINGS

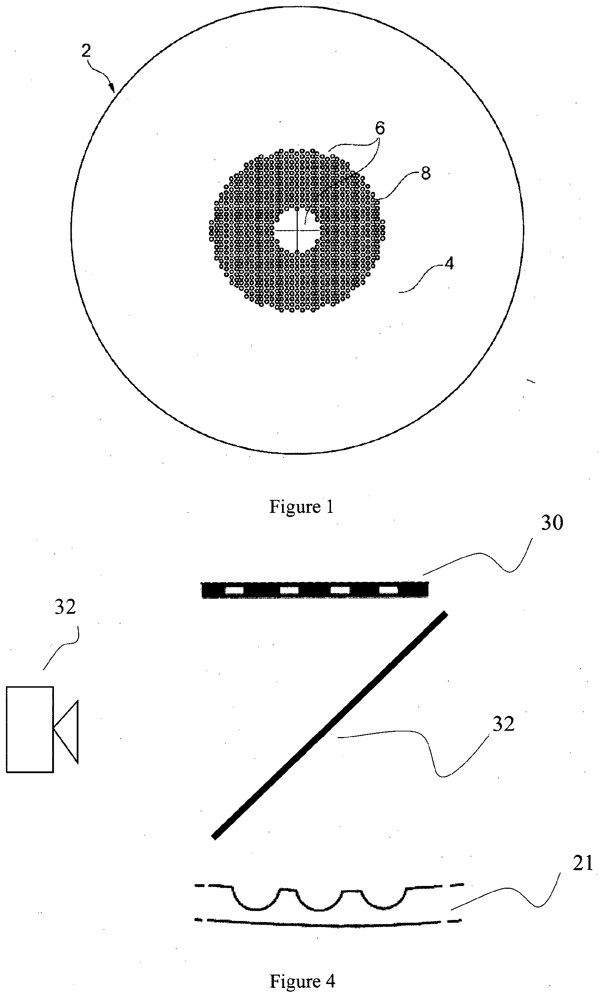

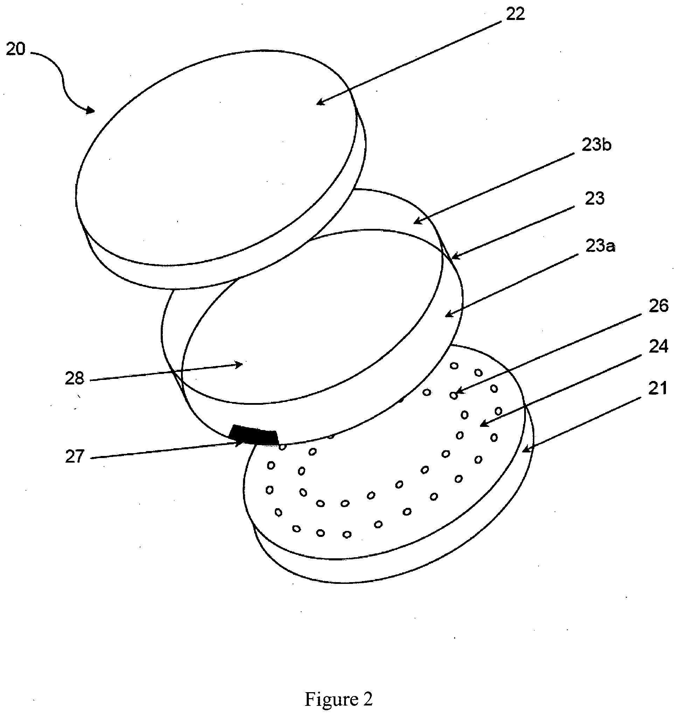

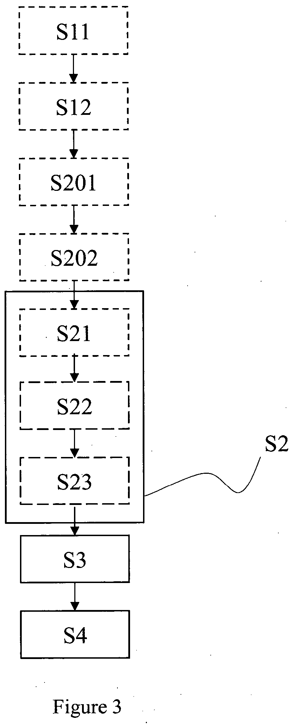

Non-limiting embodiments of the disclosure will now be described with reference to the accompanying drawing wherein:
o figure 1 is a plan view of a lens element that may be characterized by a method according to the disclosure;
o Figure 2 illustrates an exploded view of a mold for a lens element according to an embodiment of the disclosure;
o Figure 3 illustrates a chart-flow embodiment of the method for characterizing at least part of an insert of an optical mold; and
o Figure 4 is a schematic representation of a fringe projection profilometry device.

Elements in the figures are illustrated for simplicity and clarity and have not necessarily been drawn to scale. For example, the dimensions of some of the elements in the figure may be exaggerated relative to other elements to help to improve the understanding of the embodiments of the present disclosure.

### DETAILED DESCRIPTION OF EMBODIMENTS OF THE DISCLOSURE

The disclosure relates to a lens element intended to be worn in front of an eye of a wearer.

In the reminder of the description, terms like « up », « bottom », « horizontal », « vertical », « above », « below », « front », « rear » or other words indicating relative position may be used. These terms are to be understood in the wearing conditions of the lens element.

In the context of the present disclosure, the term "lens element" can refer to a semi-finished optical lens, or an uncut optical lens or a spectacle optical lens edged to fit a specific spectacle frame or an ophthalmic lens and an optical device adapted to be positioned on the ophthalmic lens. The "lens element" in the context of the present disclosure may have a coating such as a hardcoat.

The disclosure relates at least to a method, for example implemented by computer means, for characterizing at least part of an insert of an optical mold 10.

The optical mold is used to manufacture a lens element, in particular a semi-finished lens element to be adapted for a wearer so as to slow abnormal refraction of the eye of the wearer.

According to different embodiments of the disclosure, the abnormal refraction of the eye is myopia, or hyperopia or astigmatism. According to a preferred embodiment of the disclosure, the abnormal refraction of the eye is myopia.

An example of such lens element is illustrated on figure 1. In the example of figure 1, the lens element 2 comprises a holder 4 having a refraction area 6 and a plurality of optical elements 8 placed on at least one surface of said holder.

The holder 4 is, for example, made of polycarbonate material.

The refraction area 6 has a first refractive power, for example based on the prescription of the eye of the person. The prescription is adapted for correcting the abnormal refraction of the eye of the person.

The term "prescription" is to be understood to mean a set of optical characteristics of optical power, of astigmatism, of prismatic deviation, determined by an ophthalmologist or optometrist in order to correct the vision defects of the eye, for example by means of a lens positioned in front of his eye. For example, the prescription for a myopic eye comprises the values of optical power and of astigmatism with an axis for the distance vision.

For example, the shape of a refraction area 6 is spherical. The shape of the other face is configured so that the refraction area has an optical function of focusing an image of a far distant element on the retina in standard wearing conditions.

The wearing conditions are to be understood as the position of the lens element with relation to the eye of a wearer, for example defined by a pantoscopic angle, a Cornea to lens distance, a Pupil-cornea distance, a center of rotation of the eye (CRE) to pupil distance, a CRE to lens distance and a wrap angle.

The Cornea to lens distance is the distance along the visual axis of the eye in the primary position (usually taken to be the horizontal) between the cornea and the back surface of the lens; for example equal to 12mm.

The Pupil-cornea distance is the distance along the visual axis of the eye between its pupil and cornea; usually equal to 2mm.

The CRE to pupil distance is the distance along the visual axis of the eye between its center of rotation (CRE) and cornea; for example equal to 11.5mm.

The CRE to lens distance is the distance along the visual axis of the eye in the primary position (usually taken to be the horizontal) between the CRE of the eye and the back surface of the lens, for example equal to 25.5mm.

The pantoscopic angle is the angle in the vertical plane, at the intersection between the back surface of the lens and the visual axis of the eye in the primary position (usually taken to be the horizontal), between the normal to the back surface of the lens and the visual axis of the eye in the primary position; for example equal to 8°.

The wrap angle is the angle in the horizontal plane, at the intersection between the back surface of the lens and the visual axis of the eye in the primary position (usually taken to be the horizontal), between the normal to the back surface of the lens and the visual axis of the eye in the primary position for example equal to 0°.

An example of standard wearer condition may be defined by a pantoscopic angle of 8°, a Cornea to lens distance of 12 mm, a Pupil-cornea distance of 2 mm, a CRE to pupil distance of 11.5 mm, a CRE to lens distance of 25.5 mm and a wrap angle of 0°.

Although the disclosure is not directed to progressive lenses, the wording used in this description is illustrated in figures 1 to 10 of document WO2016/146590 for a progressive lens. The skilled person can adapt the definitions for single vision lenses.

A progressive lens comprises at least one but preferably two non-rotationally symmetrical aspheric surfaces, for instance but not limited to, progressive surface, regressive surface, toric or atoric surfaces.

As is known, a minimum curvature CURVmin is defined at any point on an aspherical surface by the formula: ${CURV}_{min} = \frac{1}{{R}_{max}}$ where Rmax is the local maximum radius of curvature, expressed in meters and CURVmin is expressed in dioptres.

Similarly, a maximum curvature CURVmax can be defined at any point on an aspheric surface by the formula: ${CURV}_{max} = \frac{1}{{R}_{min}}$ where Rmin is the local minimum radius of curvature, expressed in meters and CURVmax is expressed in dioptres.

It can be noticed that when the surface is locally spherical, the local minimum radius of curvature Rmin and the local maximum radius of curvature Rmax are the same and, accordingly, the minimum and maximum curvatures CURVmin and CURVmax are also identical. When the surface is aspherical, the local minimum radius of curvature Rmin and the local maximum radius of curvature Rmax are different.

From these expressions of the minimum and maximum curvatures CURVmin and CURVmax, the minimum and maximum spheres labeled SPHmin and SPHmax can be deduced according to the kind of surface considered.

When the surface considered is the object side surface (also referred to as the front surface), the expressions are the following: ${SPH}_{min} = \left(n-1\right) ∗ {CURV}_{min} = \frac{n - 1}{{R}_{max}} , and {SPH}_{min} = \left(n-1\right) ∗ {CURV}_{min} = \frac{n - 1}{{R}_{max}}$ where n is the refractive index of the constituent material of the lens.

If the surface considered is an eyeball side surface (also referred to as the back surface), the expressions are the following: ${SPH}_{min} = \left(1-n\right) ∗ {CURV}_{min} = \frac{n - 1}{{R}_{max}} and {SPH}_{max} = \left(n-1\right) ∗ {CURV}_{max} = \frac{1 - n}{{R}_{min}}$ where n is the refractive index of the constituent material of the lens.

As is well known, a mean sphere SPHmean at any point on an aspherical surface can also be defined by the formula: ${SPH}_{mean} = \frac{1}{2} \left({SPH}_{min}+{SPH}_{max}\right)$ The expression of the mean sphere therefore depends on the surface considered:
if the surface is the object side surface, ${SPH}_{mean} = \frac{n - 1}{2} \left(\frac{1}{{R}_{min}}+\frac{1}{{R}_{max}}\right)$
if the surface is an eyeball side surface, ${SPH}_{mean} = \frac{1 - n}{2} \left(\frac{1}{{R}_{min}}+\frac{1}{{R}_{max}}\right)$
a cylinder CYL is also defined by the formula *CYL =* |*SPH*ₘₐₓ *- SPH*ₘᵢₙ|.

The characteristics of any aspherical face of the lens may be expressed by the local mean spheres and cylinders. A surface can be considered as locally non-spherical when the cylinder is at least 0.25 diopters.

For an aspherical surface, a local cylinder axis γAX may further be defined. Figure 7a illustrates the astigmatism axis γ as defined in the TABO convention and figure 7b illustrates the cylinder axis γAX in a convention defined to characterize an aspherical surface.

The cylinder axis γAX is the angle of the orientation of the maximum curvature CURVmax with relation to a reference axis and in the chosen sense of rotation. In the above defined convention, the reference axis is horizontal (the angle of this reference axis is 0°) and the sense of rotation is counter clockwise for each eye, when looking at the wearer (0°≤γAX≤180°). An axis value for the cylinder axis γAX of +45° therefore represents an axis oriented obliquely, which when looking at the wearer, extends from the quadrant located up on the right to the quadrant located down on the left.

According to an embodiment, the shape of the second face of the lens element may be sphero-torical. Advantageously, the shape of said second face is aspherical and calculated by an optical optimization such that every light beam incident on the refraction area 6 is focused on the retina of the wearer when the lens is worn, for example in standard wearing conditions.

The refraction area 6 is preferably formed by the area not covered by any optical element of the plurality of optical elements 8. In other words, the refractive area is the complementary area to the areas formed by the plurality of optical elements 8.

The lens element 2 according to the disclosure further comprises a plurality of optical elements 8. The optical elements 8 are placed on at least one surface of the holder 4. Preferably, the optical elements 8 are placed on the front face of the lens element 2. The front face of the lens element 2, or "object side" face, corresponds to the face of the lens element which is not facing the eye of the person.

According to the disclosure the lens element may comprise at least three, for example at least twenty, for example at least fifty, for example at least a hundred of optical elements 8.

At least one, for example at least 50%, for example at least 80% for example at least 95% of the optical elements 8 has/have a second optical function, for example an optical function of not focusing an image of a far distance point on the retina of the eye of the wearer in standard wearing conditions. In other words, At least one, for example at least 50%, for example at least 80% for example at least 95% of the optical elements 8 has/have an optical function of focusing an image of a far distance point in front of and/or behind the retina of the wearer in standard wearing conditions.

When the abnormal refraction of the eye of the person corresponds to myopia the optical elements 8 have an optical function of focusing an image of a far distance point in front of the retina of the eye of the wearer when worn by the wearer in standard wearing conditions.

When the abnormal refraction of the eye of the person corresponds to hypermetropia the optical elements 8 have an optical function of focusing an image of a far distance point behind the retina of the eye of the wearer when worn by the wearer in standard wearing conditions.

Preferably, at least 30%, for example at least 80%, for example all, of the optical elements have an optical function of focusing an image of a far distant point on a position other than the retina when worn by the wearer in standard wearing conditions.

In the sense of the disclosure "focusing" is to be understood as producing a focusing spot with a circular section that can be reduced to a point in the focal plane.

Advantageously, such optical function of the optical element produces an optical signal that inhibits the deformation of the retina of the eye of the wearer, allowing to prevent or at least slow down the progression of the abnormal refraction of the eye of the person wearing the lens element 2.

Such a lens element is generally manufactured from a semi-finished optical lens having a finished surface corresponding to the surface of the final lens having the optical elements.

The semi-finished optical lens is manufactured using a mold such as the optical mold 20 illustrated on figure 2.

As illustrated in figure 2, an optical mold 20 for a lens element may comprise an insert 21, a molding element 22 and a gasket 23.

The insert 21 may have an inner surface 24 having a first surfacic curvature. For example, the inner surface 24 may have a spherical surfacic curvature. Alternatively, the inner surface 24 may have an aspherical surfacic curvature and/or a cylindrical surfacic curvature and/or a toric surfacic curvature. The inner surface 24 of the insert 21 corresponds to the surface of the holder 4 of a face of a lens element to be manufactured using the mold 20. For example, the inner surface 24 may correspond to the surface of the holder 4 having an optical function based on a prescription of a wearer.

The insert surface 24 further comprises a plurality of insert elements 26 having at least a second surfacic curvature that differs from the first curvature of the inner surface 24. Typically, the insert elements have a mean sphere.

Part of, preferably all of the plurality of insert elements 26 present an axis of symmetry (Di).

The plurality of insert elements 26 have a contour shape being inscribable in a circle (C) having a diameter greater than or equal to 0.6 mm, for example greater than or equal to 0.8 mm and smaller than or equal to 3.5 mm, for example smaller than or equal to 3 mm. The circle (C) may be a planar projection of the surface of the insert element, for example in a plane orthogonal to the axis of symmetry of the insert element.

The axis of symmetry of each insert element 26 may correspond to the center of circle in which said insert element is inscribed.

The second surfacic curvature of at least one of the plurality of insert elements 26 may be a spherical and/or aspherical and/or cylindrical and/or toric surfacic curvature. The plurality of insert elements 26 of the insert 21 correspond to the optical elements 8 placed on the hold 4 of the lens element 12 to be molded using the mold 20.

In the sense of the disclosure, aspherical insert elements have a continuous evolution over their surface.

For each insert element 26, one may define a central zone and a peripheral zone of the insert element. The central zone of the insert element corresponds to a circular zone comprised in the circle (C), having the same center as circle (C) and having a radius equal to 0.75 times the radius of the circle (C). The peripheral zone of the insert element corresponds to the concentric ring of the circle (C) distant by at least 0.75 times the radius of the circle (C).

The average mean sphere of the insert element in the central zone of said insert element may be different from the average mean sphere of the insert element in the peripheral zone of said insert element. For example, the average mean sphere in the central zone is higher than the average mean sphere in the peripheral zone of said insert element. Alternatively, the average mean sphere in the central zone may be lower than the average mean sphere in the peripheral zone of said insert element.

In the sense of the disclosure, the "average mean sphere" refers to the average value of the mean sphere over a zone of a lens element, or an insert surface or a zone of a lens element or insert element. The same applies to cylinder values.

Along a section of an insert element 26 a section passing through the axis of symmetry (Di) of said insert element, the mean sphere of the insert element may increase from the intersection between the axis of symmetry and the surface of the insert element to a first point, and decrease from said first point to the periphery of the insert element.

At least one, preferably 50%, more preferably more than 80% of the plurality of insert elements 26 may have a toric surface. A toric surface is a surface of revolution that can be created by rotating a circle or arc about an axis of revolution (eventually positioned at infinity) that does not pass through its center of curvature. Toric surface elements have two different radial profiles at right angles to each other.

The toric insert element may be a pure cylinder, meaning that minimum meridian is zero, while maximum meridian is strictly positive.

According to an embodiment of the disclosure, at least two of the plurality of insert elements 26 are non-contiguous. In the sense of the disclosure, two insert elements are non-contiguous if for all the paths linking the two insert elements one may measure at least along part of each path the first surfacic curvature of the first surface 24 of the first molding element 21.

According to an embodiment of the disclosure, at least two of the plurality of insert elements 26 are contiguous. In the sense of the disclosure two insert elements are contiguous if for at least one path linking the two insert elements one may not measure along said at least one path the first surfacic curvature of the first surface 24 of the first molding element 21.

At least part, for example all of the plurality of insert elements 26 may be positioned on a structured network.

According to an embodiment of the disclosure, the disposition of at least part, for example all of the plurality of insert elements 26 on the first surface of the first molding element exhibit symmetry of revolution about an axis, for example centered on the geometrical center of the inner surface 24 of the first molding element 21. In other words, at least part of the plurality of insert element 16 may be regularly distributed along at least one circle centered on the geometrical center of the first surface 24 of the first molding element 21.

According to an embodiment of the disclosure, at least part, for example all of the plurality of insert elements 26 are placed on at least a ring on the first surface 24 of the first molding element 21.

The plurality of insert elements may further be organized on concentric rings on the first surface of the first molding element. For example, the plurality of insert elements 26 are positioned along a set of 11 concentric rings over the entire first surface 24 of the first molding element 21. The concentric rings of insert elements may be centered on the geometrical center of the first surface 24 of the first molding element 21. At least part of the rings may, for example at least 5, for example at least 10 of the rings are formed of contiguous insert elements.

The average mean sphere of the plurality of insert elements 26 may be identical for all the insert elements of the same concentric ring. In particular, the average mean sphere of the central zone of the insert elements 26 of the same concentric ring are identical.

According to other embodiments of the disclosure, the plurality of insert elements 26 may be organized on different patterns, such as for example square shaped pattern.

The plurality of insert elements 26 may be configured so that along at least one section of the first molding element 21, the mean surfacic curvature of the plurality of insert elements, for example the mean surfacic curvature of the central zone of the plurality of insert elements 26 increases from a point of the section towards the peripheral part of said section.

The plurality of insert elements 26 may be configured so that along at least one section of the first molding element 21 passing through a geometric center of the first surface 24 of said first molding element, the mean surfacic curvature of the plurality of insert elements 26 increases from said geometric center towards the peripheral part of said section. For example, the mean surfacic curvature of the central zone of the insert elements 26 increases along the section passing through the geometric center of the first surface of the first molding element from said geometric center to the periphery. Similarly, the mean surfacic curvature of the peripheral zone of the insert elements may increase along the section passing through the geometric center of the first surface of the first molding element from said geometric center to the periphery.

The plurality of insert elements 26 may be configured so that along at least one section of the first molding element 21, for example a section passing through the geometric center of the first surface of the first molding element, the mean surfacic curvature of the plurality of insert elements 26, for example the mean surfacic curvature of the central zone of the plurality of insert element, increases from a first point of said section towards the peripheral part of said section and decreases from a second point of said section towards the peripheral part of said section, the second point being closer to the peripheral part of said section than the first point.

For every circular zone having a radius comprised between 4 and 8 mm comprising a geometrical center of the first surface of the first molding element greater or equal to said radius + 5mm, for example greater than or equal to +8 mm, the ratio between the sum of areas of the plurality of insert elements located inside said circular zone and the area of said circular zone is greater than or equal to 20%, for example greater than or equal to 30%, for example greater than or equal to 40 % and smaller than or equal to 80%, for example smaller than or equal to 70%, for example smaller than or equal to 60%.

The mold 20 for a lens element 2 may further comprise a second molding element 22. The second molding element 22 has a second surface 25. On figure 3, the second surface 25 of the second molding element 22 is not represented as it faces the first surface 24 of the first molding element.

The mold 20 for the lens element 2 further comprises a gasket 23. The gasket 23 has an annular form comprising an inner surface 23a and an outer surface 23b. The gasket 23 further comprises an opening 27.

The gasket 23 seals the first and second molding elements 21 and 22 together to form a molding cavity 28. The molding cavity 28 is defined by the first,surface 24 comprising the insert elements 26 of the first molding element 21, the second surface 25 of the second molding element 22, and the inner surface 23a of the gasket 23.

The molding cavity 28 of the mold 20 for a lens element 2 is filled with a molding material through the opening 27. Despite being represented in the gasket 23, the opening 27 may alternatively be placed on the first molding element or the second molding element.

For example, the molding material may be a casting material poured into the molding cavity through the opening 27 of the gasket 23. The casting material in the molding cavity is further polymerized into a lens material thereby forming the lens element 2.

Alternatively, the molding material may be a thermo-plastic material. The thermo-plastic material which is in a first liquid state at a first temperature is injected into the mold cavity 28 through opening 27. During the cooling process, the thermo-plastic material changes from a first liquid state to a second solid state corresponding to the lens material of lens element 2.

A defect on the inner surface of the insert will be replicated on the lens element manufactured using the insert. Therefore, there is a need for an accurate and easily implemented method to characterize directly the inner surface of the insert.

As represented on figure 3, the disclosure relates to a method, for example implemented by computer means, for characterizing at least part of an insert of an optical mold at least partially reflecting visible light.

Typically, the insert has a mean transmission T below 50%, for example below 75% over the visible spectrum. In other words, the surfaces of the insert, in particular the inner surface of the insert, reflect at least 50%, for example 75%, of the light over the visible spectrum. In the sense of the invention the "mean transmission T" corresponds to the integrated value of spectral transmission over the visible spectrum divided by the visible spectrum range, wherein one may consider that T+R= 1 with T the transmission and R the reflectance of the insert. As illustrated previously, the insert comprises an inner surface comprising a plurality of insert elements and being adapted to obtain a face of a lens element comprising a plurality of optical elements corresponding to the plurality of insert elements, each optical element of the plurality of optical elements having a mean sphere.

As illustrated on figure 3, the method of the disclosure comprises:
- a step of obtaining a two-dimensional representation of the local mean sphere S2,
- a step of determining the mean sphere distribution S3, and
- a characterization step S4.

During the step of obtaining a two-dimensional representation of the local mean sphere S2, a two-dimensional representation of the local mean sphere of at least part of the insert inner surface using a fringes projection method.

Such a fringes projection profilometry method may comprise:
- projection step S21
- an image acquisition step S22, and
- a phase map determining step S23.

During the projection step S1, images of fringes are projected on at least part of the insert inner surface. The fringes may form a spatial periodic pattern comprising stripes, the spatial periodic pattern having a spatial period or step.

During the image acquisition step S2, images of fringes reflected by the at least part of the insert inner surface on which the images of fringes are acquired.

As illustrated on figure 4, a fringe projection consists in positioning an insert 21 to be characterized facing an image display device 30 such as a screen. The image displayed by the display device 30 are reflected on the inner surface of the insert and sent to an image acquisition device 32 such as a camera using a partial mirror 34.

The image acquisition device 32 and image display device 30 wavelength should be consistent. For example, the camera is adapted to acquire images in visible light spectrum and the image display device is adapted to display fringes in the visible light spectrum.

According to an embodiment, the camera may be adapted to acquire images in UV spectrum and the image display device is adapted to display fringes in UV spectrum.

On the screen, black and white fringes are scrolled. Their scrolling is observed via the camera with a delay or acceleration which is related to the deviation of the light rays caused locally by the insert element. Preferably the black and white fringes are of equal thickness.

According to an example of embodiment, the fringes have a period of 7 pixels. The fringes are successively phase shifted by one pixel over the width of one period. Therefore, there are 7 one-pixel shifts and so 7 photos taken. This process is done twice, once by displaying the fringe vertically and once horizontally, so as to have two phase maps to form a base.

The inventors have determined that to increase the accuracy of the characterization the image used for the deflectometry should consist of pixels smaller than or equal to 0.05mm x 0.05mm.

In the sense of the disclosure, the feature "image used" corresponds to the result of the transformation of the images acquired by the image acquisition device 22 by using the algorithm. In other words, the calculation is configured to generate an image calibrated to have one pixel covering 0.05 x 0.05mm.

Furthermore, the method of the disclosure may further comprise as step referred to as step S201 on figure 3 prior to projecting the images of fringes. Step S201 comprises adjusting the step of the fringes to increase the accuracy of the mean sphere measurements by comparing the mean sphere values with reference mean sphere values.

Furthermore, the method of the disclosure may further comprise as step referred to as step S202 on figure 3 prior to projecting the images of fringes. Step S202 comprises adjusting the distance between the fringes and the insert to increase the accuracy of the mean sphere measurements by comparing the mean sphere values with reference mean sphere values.

According to an embodiment of the disclosure, the two-dimensional representation of the local mean sphere corresponds to at least 25%, for example at least 30%, for example at least 50% of the insert inner surface.

According to an embodiment of the disclosure, the two-dimensional representation of the local mean sphere corresponds to at least a part of the insert inner surface that comprises at least 25%, for example at least 30%, for example at least 50% of the insert elements.

During the phase map determining step S23, a phase map of the at least part of the insert inner surface is determined based on the obtained reflected images of fringes.

In particular, once all the fringes pattern has been projected and captured by the camera, one may compute the vertical and horizontal phase. To do this, one may use the "N-FFT" algorithm. This algorithm is used to limit the signal-to-noise ratio and measure harmonics for a minimum number of phase shifts. In other words, this algorithm corresponds to the calculation of the argument of the first coefficient of the discrete Fourier transform of the set of fringes. One consequently ends up with two phases, one vertical and one horizontal.

These two phases are not in their final form, they are folded. In other words, the phase map is not continuous, there is a 2π jump. This is due to the presence of the arc tangent function in the N-FTT algorithm. This process uses a spatial unfolding algorithm developed by the applicant. To solve this problem, one needs to unfold the phase to make it continuous by adding or subtracting locally the appropriate multiple of 2π. If this difference is arithmetically greater than π, for example, one adds (or subtracts, depending on the sign of this difference) 2π to the phase value of the second pixel and to all subsequent pixels. This is referred to as spatial phase unwrapping when a single phase map is utilized. One now has the two phases in their final forms.

Once these two phases have been calculated, one may derive the horizontal phase along the horizontal axis and the vertical phase along the vertical axis. Therefore, one ends up with two new maps, respectively Gx and Gy, which are gradients. To obtain a single map, G, one may take the square root of the quadratic sum of these two gradients. One now has a phase derivative map. This map is in grayscale and its pixels are encoded in 32-bit float.

During the step of determining the mean sphere distribution S3, the mean sphere distribution over at least part of the two-dimensional representation of the insert inner surface is determined.

According to an embodiment, the two-dimensional representation of the local mean sphere of the at least part of the insert inner surface is obtained based on a map of the module of derivative of the phase map of the at least part of the insert inner surface.

To trace the mean sphere, one may use a relation calculated during a calibration phase, to be carried out before the first measurement. This calibration consists of measuring two reflection gauge on the device, who's mean sphere values are precisely known. Power calibration enables to determine the mathematical relation between what is measured, i.e. a phase derivative coded in gray scale, and the accurate mean sphere. This relation is an affine function. Knowing this relation, on may can trace the mean sphere of the inner surface of the insert by applying this relation to each pixel. Therefore it is possible to determine a power map of the inner surface of the insert.

As represented on figure 3, the method of the invention may comprise prior to obtaining the two-dimensional representation of the local mean sphere of the least part of the insert inner surface,:
- a calibration step S11, during which one calibrates the fringes projection profilometry method by determining maps of module of derivative of the phase maps of at least two, for example at least four, reflective gauges having known mean spheres and
- a relationship determining step during which one determines a relationship between the map of derivative of the phase maps and the two-dimensional representation of the local mean sphere based on the phase maps of the at least two, for example at least four, reflective gauges.

With the mean sphere map of the inner surface, one can characterize the inner surface of the insert, for example one may detect the insert elements. To do this, several filters may be applied to the mean sphere map, firstly a low-pass filter to reduce noise, then adaptive thresholding to bring out the pixels with the highest intensity, i.e. the salient edges of the insert elements, by making the other pixels black.

Finally, one may use a specific algorithm to make the edges of the insert element stand out more clearly.

One can now use a classic edge detection algorithm to detect the insert element. For example, an insert element is detected when its size is within plus or minus twenty percent of its theoretical size, for example one millimeter.

The method of the disclosure may comprise a mean sphere accuracy adjustment step.

To adjust the accuracy, one has 2 factors, the step of fringe and the distance between the display device and the insert measured. To understand the equation and its consequences, one may plot the accuracy according to the step of the fringes and the accuracy according to the distance display device/insert.

The step of the fringes changes the slope of the accuracy curve and therefore the mean sphere of the insert element without affecting the average mean sphere of the inner surface of the insert.

The distance between the display device and the insert changes the linearity.

By adjusting these 2 factors, one may find an optimal point, compared to a reference measurement and found the real value of mean sphere in diopter of the insert elements.

The method of the disclosure may comprise a size adjustment step. Indeed, to know the relation between pixel and real size, one may need to use the relation determined during the calibration phase. During this phase, one may use a gauge with a pattern of points whose configuration and size are known precisely.

During the characterization step S4, at least the part of the insert inner surface within said at least part of the two-dimensional representation of the insert inner surface is characterized by analyzing the determined mean sphere distribution.

For example, the part of the insert inner surface within said at least part of the two-dimensional representation of the lens element is characterized based on at least one of:
- the mean sphere value of at least one local maximum of the determined mean sphere distribution, and/or
- the surface of at least one local maximum of the determined mean sphere distribution, and/or
- the width value of at least one local maximum of the determined mean sphere distribution, and/or
- the degree of symmetry of at least one local maximum of the determined mean sphere distribution.

The characterizing step S4 may comprise at least identifying the center of at least part of the insert elements, for example of at least 20 insert elements, for example at least 50 insert elements, for example at least 20% of the insert elements, for example at least 50% of the insert elements. The identification of the center of the insert element may be carried out using a Hough transformation algorithm.

The characterization step S4 may comprise at least determining:
- the mean sphere at the center of at least part of the insert elements and/or
- the global average means sphere of at least part of the insert elements, for example determined over a circular zone centered on the center of the insert element and having a diameter of 80% of the diameter of the insert element, and/or
- the peripheral mean sphere of at least part of the insert elements and/or
- the asphericity of at least part of the insert elements and/or
- the number of insert elements and/or
- the density of insert elements and/or
- the positions of the insert elements; and/or
- the size of at least part of the insert elements.

According to an embodiment of the disclosure, characterizing at least part of the plurality of insert elements comprises at least determining the optical cylinder value and the optical cylinder axis of at least part of the insert elements.

The characterization step S4 may comprise determining the average mean sphere of the holder around the insert element and subtracting said average mean sphere to the two-dimensional representation of the local mean spheres.

Advantageously, the method of the disclosure is easy to implement in a manufacturing plant and provides accurate characterization of the insert elements of the insert. Furthermore, the method of the disclosure is implemented quickly and does not require long training to be implemented.

Therefore, the method of the disclosure may be used in a manufacturing plant for checking the conformity of an insert of an optical mold.

Thus, the disclosure also relates to a method for checking the conformity of an insert of an optical mold at least partially reflecting visible light, for example having a transmission T below 50% over the visible spectrum, the insert comprising an inner surface comprising a plurality of insert elements and being adapted to obtain a face of lens element comprising a plurality of optical elements corresponding to the plurality of insert elements, each optical element of the plurality of optical elements having a mean sphere; so as to at least one of slow down, retard or prevent a progress of the abnormal refraction of the eye of the wearer.

The method for checking the conformity of an insert may comprise:
- obtaining characterizing data relating to at least one mean sphere characteristic of the insert elements of the insert,
- characterizing the insert elements of the insert using the method of the disclosure, for example as described in detail previously with the different possible alternatives and combinations,
- comparing the characteristics of the insert elements of the insert with the characterizing data so as to check the conformity of the insert.

The method for characterizing at least part of an insert of an optical mold of the disclosure may be implement rapidly and easily, said method may be used for controlling an insert manufacturing process.

Thus, the disclosure also relates to a method for controlling an insert manufacturing process for manufacturing an insert of an optical mold at least partially reflecting visible light, for example having a transmission T below 50% over the visible spectrum, each insert comprising an inner surface comprising a plurality of insert elements and being adapted to obtain a face of lens element comprising a plurality of optical elements corresponding to the plurality of insert elements, each optical element of the plurality of optical elements having a mean sphere so as to at least one of slow down, retard or prevent a progress of the abnormal refraction of the eye of the wearer.

The method for controlling an insert manufacturing process may comprises the steps of:
a) manufacturing an insert according to a manufacturing process,
b) determining at least one characteristic of the insert of step a) according to the method of the disclosure, for example as described in detail previously with the different possible alternatives and combinations,
c) recording the difference between the determined at least one characteristic and a reference value,
d) repeating regularly step a) to c) and checking the evolution of the difference over time.

The evolution of at least one parameter of the manufacturing process used for manufacturing the insert is checked over time and the evolution over time of said difference is related with the evolution over time of the at least one parameter of the manufacturing process.

The disclosure further relates to computer program product comprising one or more stored sequences of instructions that are accessible to a processor and which, when executed by the processor, causes the processor to carry out at least one of the steps of a method according to the disclosure, for example a method for characterizing at least part of an insert of an optical mold and any of the possible embodiment of such method disclosed herein, for example a method for controlling an insert manufacturing process according to the disclosure, for example a method for checking the conformity of an insert of an optical mold according to the disclosure.

The disclosure further relates to a computer readable medium carrying one or more sequences of instructions of the computer program product according to the disclosure.

The disclosure has been described above with the aid of embodiments without limitation of the general inventive concept. Many further modifications and variations will be apparent to those skilled in the art upon making reference to the foregoing illustrative embodiments, which are given by way of example only and which are not intended to limit the scope of the disclosure, that being determined solely by the appended claims.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the disclosure.

## Claims

1. Method for characterizing at least part of an insert of an optical mold at least partially reflecting visible light, for example having a mean transmission T below 50% over the visible spectrum, the insert comprising an inner surface comprising a plurality of insert elements and being adapted to obtain a face of a lens element comprising a plurality of optical elements corresponding to the plurality of insert elements, each optical element of the plurality of optical elements having a mean sphere;
wherein the method comprises:
- obtaining a two-dimensional representation of the local mean sphere of at least part of the insert inner surface using a fringes projection profilometry method,
- determining the mean sphere distribution over at least part of the two-dimensional representation of the insert inner surface, and
- characterizing at least the part of the insert inner surface within said at least part of the two-dimensional representation of the insert inner surface by analyzing the determined mean sphere distribution.

2. The method according to claim 1, wherein the fringes projection profilometry method comprises at least of:
- projecting images of fringes on at least part of the insert inner surface,
- acquiring reflected images of fringes reflected by the at least part of the insert inner surface on which the images of fringes are acquired,
- determining a phase map of the at least part of the insert inner surface based on the obtained reflected images of fringes.

3. The method according to claim 2, wherein the two-dimensional representation of the local mean sphere of the at least part of the insert inner surface is obtained based on a map of the module of derivative of the phase map of the at least part of the insert inner surface.

4. The method according to claim 3, wherein prior to obtaining the two-dimensional representation of the local mean sphere of the least part of the insert inner surface, the method further comprises:
- calibrating the fringes projection profilometry method by determining maps of module of derivative of the phase maps of at least two, for example at least four, reflective gauges having known mean spheres and
- determining a relationship between the map of derivative of the phase maps and the two-dimensional representation of the local mean sphere based on the phase maps of the at least two, for example at least four, reflective gauges.

5. The method according to any of claims 2 to 4, wherein prior to projecting the images of fringes, the method comprises adjusting the step of the fringes to increase the accuracy of the mean sphere measurements by comparing the mean sphere values with reference mean sphere values.

6. The method according to any of claims 2 to 5, wherein prior to projecting the images of fringes, the method comprises adjusting the distance between the fringes and the insert to increase the accuracy of the mean sphere measurements by comparing the mean sphere values with reference mean sphere values.

7. The method according to any of the preceding claims, wherein the two-dimensional representation of the local mean sphere corresponds to at least 25%, of the insert inner surface.

8. The method according to any of the preceding claims, wherein the two-dimensional representation of the local mean sphere corresponds to at least a part of the insert inner surface that comprises at least 25% of the insert elements.

9. The method according to any of the preceding claims, wherein the images used for the fringe projection profilometry method are composed of pixels smaller than or equal to 0.05 mm x 0.05 mm.

10. The method according to any of the preceding claims, wherein the part of the insert inner surface within said at least part of the two-dimensional representation of the lens element is characterized based on at least one of:
- the mean sphere value of at least one local maximum of the determined mean sphere distribution, and/or
- the surface of at least one local maximum of the determined mean sphere distribution, and/or
- the width value of at least one local maximum of the determined mean sphere distribution, and/or
- the degree of symmetry of at least one local maximum of the determined mean sphere distribution.

11. The method according to any of the preceding claims, wherein characterizing at least part of the plurality of insert elements comprises at least identifying the center of at least part of the insert elements, for example using a Hough transformation algorithm.

12. The method according to any of the preceding claims, wherein characterizing at least part of the plurality of insert elements comprises at least determining:
- the mean sphere at the center of at least part of the insert elements and/or
- the global average means sphere of at least part of the insert elements and/or
- the peripheral mean sphere of at least part of the insert elements and/or
- the asphericity of at least part of the insert elements and/or
- the number of insert elements and/or
- the density of insert elements and/or
- the positions of the insert elements; and/or
- the size of at least part of the insert elements.

13. The method according to any of the preceding claims, wherein at least 50% of the insert elements correspond to refractive lenslets.

14. The method according to any of the preceding claims, wherein at least 50% of the insert elements correspond to multifocal lenslets.

15. Method for checking the conformity of an insert of an optical mold at least partially reflecting visible light, for example having a transmission T below 50% over the visible spectrum, the insert comprising an inner surface comprising a plurality of insert elements and being adapted to obtain a face of lens element comprising a plurality of optical elements corresponding to the plurality of insert elements, each optical element of the plurality of optical elements having a mean sphere;
so as to at least one of slow down, retard or prevent a progress of the abnormal refraction of the eye of the wearer,
wherein the method comprises:
- obtaining characterizing data relating to at least one mean sphere characteristic of the insert elements of the insert,
- characterizing the insert elements of the insert using the method of any of claims 1 to 14,
- comparing the characteristics of the insert elements of the insert with the characterizing data so as to check the conformity of the insert.
